# EUROPÄISCHE PATENTANMELDUNG

(11) **EP 1 506 714 A1**
(43) Veröffentlichungstag der Anmeldung: **16.02.2005**
(21) Anmeldenummer: 04004786.2
(22) Anmeldetag: 02.03.2004
(51) Int. Cl.: A23L 1/187, A23L 1/052, G07F 13/06

(54) **Trockengemisch zur Zubereitung von Fertigdesserts im Automatenbetrieb und Verfahren zur Herstellung daraus zubereiteter Endprodukte**

(30) Priorität: 11.08.2003 DE 10336880
(71) Anmelder: Dr. AUGUST OETKER NAHRUNGSMITTEL KG, 33617 Bielefeld (DE)
(72) Erfinder: Janssen, Daniela, 47574 Goch (DE); Pankratz, Michael, 33619 Bielefeld (DE); Hoffmann, Susanne, 33617 Bielefeld (DE)
(74) Vertreter: Meyer, Gerd

(57) **Zusammenfassung**

Die vorliegende Erfindung beschreibt ein Trockengemisch zur Zubereitung eines Desserts, welches dadurch gekennzeichnet ist, daß es aus
0 - 50 % Kohlenhydrat-Süßmittel,
0 - 15 % emulgierender Stoffe,
5 - 50 % Verdickungsmittel,
8 - 50 % dispergierenden Substanzen und
10 - 80 % Milchbestandteilen
besteht.

## Beschreibung

Trockengemische, wie z.B. Dessert-, Suppen-, Saucenpulver und dergleichen können wegen ihrer guten Lagerfähigkeit für den späteren Einsatz bevorratet werden. Dies gewährleistet neben der ständigen Verfügbarkeit auch einen geringen Zubereitungsaufwand für den Verbraucher, da das Pulver in aller Regel nur noch in Flüssigkeiten eingerührt zu werden braucht. Daher sind derartige Mischungen grundsätzlich geeignet, in Verkaufsautomaten, die zur Frischzubereitung von Produkten wie z.B. Kaffee, Kakao, Tee, warme Milch und dergleichen dienen, verwendet zu werden. Allerdings werden dafür spezielle Trockengemische erforderlich.

Auf dem Dessertpulvermarkt stehen zwar diverse Produkte der Nährmittelindustrie zur Verfügung. Es ist jedoch kein Trockengemisch bekannt, das zur Verwendung in vorstehend näher beschriebenen Automaten geeignet ist, um so den Zweck zu erfüllen, dem Verbraucher innerhalb kürzester Zeit ein entsprechend frisch zubereitetes warmes puddingähnliches Dessert zu liefern. Dies wäre indes im Kantinenbetrieb, in Werkhallen, auf Bahnhöfen usw. von entscheidendem Vorteil, weil an derartigen, ohne Bestellung und deshalb sofort abrufbar, warmen Erzeugnissen als Zwischenmahlzeit Bedarf besteht.

Bestens geeignet für diesen Zweck sind Instant-Dessertpulver in Form von vorgemischten Halberzeugnissen, welche in einer vorgegebenen Flüssigkeitsmenge unter Beachtung eines vorherbestimmten Temperaturintervalls eingemischt werden.

Aus der Österreichischen Patentschrift 317 658 ist die Herstellung eines Instant-Puddingpulvers auf der gelierenden Basis von wasserlöslichen Proteinsubstanzen in Verbindung mit sauren und neutralen Natriumpyrophosphaten und ggf. unter Zugabe von Carrageenaten, Alginaten oder Carubin bekannt, wodurch jedoch immer ein zwischen 20 - 80 Gew.-% liegender Zuckeranteil mit eingebracht wird.

Aus der Deutschen Patentschrift 2 261 406 ist die Herstellung eines Nahrungsmittel-Instant-Pulvers bekannt, bei der durch Agglomeration die Geruchs- und Geschmacksstoffe eingebracht werden. Die Teilchen des Nahrungsmittelproduktes werden auf spezielle Weise agglomeriert, so daß in den fertigen Agglomeraten, in denen die Primärteilchen verbindenden Brücken die gewünschte Geschmacksund/oder Geruchsstoffe fest eingeschlossen sind und damit gegen äußere Einflüsse gut geschützt sein sollen. Nachteilig wirkt sich jedoch der große Kostenaufwand für die Produktion dieser Produkte durch dieses Verfahren aus.

In der Britischen Patentschrift 2 132 869 wird ein Nahrungsmittel-Instant-Pulver beschrieben, das auf einer vorgelatinisierten Stärke und einer Zuckerkomponente basiert, während diese Bestandteile eine spezielle Teilchengröße aufweisen, um eine verbesserte Textur und ein besseres Erscheinungsbild zu erzielen. Dem ist jedoch dagegenzusetzen, daß es für ein gelingsicheres Produkt nicht ausreicht, die Teilchengröße der Stärke- und Zuckerkomponenten so zu wählen, daß sie ein zufriedenstellendes Ergebnis liefern, denn die Gefahr, daß durch entsprechende Lieferumstände des Rohstofflieferanten die Teilchengröße nicht eingehalten wird, stellt ein zu großes Risiko für die Qualität der Produkte dar. Die Stärke sollte daher so gewählt sein, daß sie in einem breiten Körnungsspektrum die Gelingsicherheit des Produktes gewährleistet.

Aufgabe der vorliegenden Erfindung ist es, ein Trockengemisch herzustellen, das im Automatenbetrieb zur Herstellung von vorzugsweise warmen verzehrfertigen Zubereitungen unter Beachtung einer speziellen Herstellungsmethode für das Endprodukt Verwendung findet und bei Temperaturen unter 100 °C klümpchenfrei unter Ausbildung der charakteristischen Eigenschaften des Endproduktes verzehrt werden kann. Diese Aufgabe wird erfindungsgemäß durch den kennzeichnenden Teil des Anspruchs 1 gelöst. Weitere Ausbildungsformen ergeben sich aus den Unteransprüchen.

Die erfindungsgemäßen Trockengemische basieren auf Milchprodukten und mindestens einer gelbildenden Substanz wie natürliche oder durch Oxidation, Säureoder Laugenbehandlung, Bleichung oder Enzyme modifizierte Kartoffel-, Mais-, Tapioka-, Weizen- und Reisstärken sowie auch acetyliertes Di-Stärkeadipat und acetyliertes Di-Stärkephosphat, welche dem Produkt seine charakteristischen Eigenschaften verleihen. Daneben kommen Dispergiermittel wie z.B. Maltodextrin, Zucker und Zuckerarten, Aromen und Farbstoffe zum Einsatz.

In der erfindungsgemäßen Trockenmischung müssen, wie vorstehend näher erläutert, gelbildende Substanzen eingesetzt werden, die Instanteigenschaften aufweisen, damit das Endprodukt im schon erwähnten Automatenbetrieb zu verwenden ist. Die Zubereitung des Endprodukts ist dann erfindungsgemäß durch Zugabe von Flüssigkeiten wie z.B. Frischmilch, hocherhitzter Milch, Buttermilch und anderen Flüssigkeiten, vorzugsweise aber Wasser, möglich.

Anstelle gelbildender Substanzen können auch Verdickungsmittel wie z.B. Alginate, Gelatine, Guarkernmehl, Pektine, Taragum, Xanthane, Zellulosederivate und andere, insbesondere Johannisbrotkernmehl und Carrageenane sowie Milch und andere gelbildende und verdickende Substanzen verwendet werden.

So kommen eine oder mehrere gelbildende und/oder verdickende Substanzen zum Einsatz, die bei einer Zubereitungstemperatur von maximal 80 °C unter minimalen Schereinwirkungen eine Viskositätssteigerung hervorrufen, zum Einsatz. Vorzugsweise sind dazu geeignet: Alginate und Alginsäure (E 400 - E 405), Agar-Agar (E 406), Johannisbrotkernmehl (E 410), Guarkernmehl (E 412), Traganth (E 413), Gummi arabicum (E 414), Xanthan (E 415), Tarakernmehl (E 417), Pektin (E 440), Cellulose (E 460 - E 466), vorzugsweise Carragen (E 407), native und modifizierte Stärken (E 1404 - E 1450).

Die schnelle und leichte Löslichkeit des erfindungsgemäßen Pulvers wird durch eine vorherbestimmte Menge des verwendeten Dispergiermittels herbeigeführt. Dadurch wird ein schnelles und klümpchenfreies Verteilen des Pulvers in der Flüssigkeit erreicht und führt zu einer homogenen Endzubereitung. Die Abrundung des erfindungsgemäßen Pulvers erfolgt durch den Zusatz von Haushaltszucker, Puderzucker, Maltodextrin, Dextrose, Fruktose und anderen in Frage kommenden Zuckerarten wie Glucosesirup und vermahlener Zucker.

Wenn die Endzubereitung des Produktes mit Wasser vorgenommen wird, werden, um den wünschenswerten Milchcharakter zu erzielen, Milchbestandteile wie Vollmilchpulver, Magermilchpulver, Molkepulver, Buttermilchpulver, Sahnepulver, Kaffeeweißer und dergleichen dem erfindungsgemäßen Produkt beigemischt.

Die Aromatisierung erfolgt nach den charakteristisch vorgegebenen Eigenschaften. Dies hat jedoch keinen Einfluß auf das Gelingen der Endzubereitung.

Voraussetzung für das Gelingen des aus der erfindungsgemäßen Mischung hergestellten Produkts ist, daß beim Mischungsprozeß Pulver zu Flüssigkeit während der Einrührphase von 1 - 300 sek. eine Anfangsviskosität von maximal 500 BE Brabender (Brabendermethode) nicht überschritten wird, um eine homogene Zubereitung zu gewährleisten. Danach muß innerhalb von 5 - 600 sek. ein Viskositätsmaximum von mindestens 300 BE erreicht werden.

### Beispiel 1:

| **Rohstoffe:** | **Gewichtsteile in %:** |
|---|---|
| Kohlenhydrat-Süßmittel: Zucker | 25 |
| dispergierende Substanzen: Glucosesirup | 15 |
| Dickungsmittel A: acetyliertes Di-Stärkeadipat | 12 |
| Dickungsmittel B: acetyliertes Di-Stärkephosphat | 7 |
| Dickungsmittel C: Johannisbrotkernmehl | 1 |
| Dickungsmittel D: Carrageen | 3 |
| Milchbestandteil A: Magermilchpulver | 18 |
| Milchbestandteil B: Molkenpulver | 10 |
| Milchbestandteil C: Sahnepulver | 8 |
| Salz | 0,2 |
| Aromastoffe | 0,7 |
| Farbstoffe | 0,1 |
| **Summe** | **100** |

### Beispiel 2:

| **Rohstoffe:** | **Gewichtsteile in %:** |
|---|---|
| Kohlenhydrat-Süßmittel: Zucker | 30 |
| dispergierende Substanzen: Glucosesirup | 25 |
| Dickungsmittel A: acetyliertes Di-Stärkeadipat | 9 |
| Dickungsmittel B: acetyliertes Di-Stärkephosphat | 4 |
| Dickungsmittel C: Johannisbrotkernmehl | 3 |
| Dickungsmittel D: Carrageen | 3 |
| Milchbestandteil A: Magermilchpulver | 12 |
| Milchbestandteil B: Molkenpulver | 8 |
| Milchbestandteil C: Sahnepulver | 5 |
| Salz | 0,4 |
| Aromastoffe | 0,55 |
| Farbstoffe | 0,05 |
| **Summe** | **100** |

## Patentansprüche

1. Trockengemisch zur Zubereitung eines Fertigdesserts, **dadurch gekennzeichnet, daß** das Trockengemisch aus
0 - 50 % Kohlenhydrat-Süßmittel,
0 - 15 % emulgierender Stoffe,
5 - 50 % Verdickungsmittel,
8 - 50 % dispergierenden Substanzen und
10 - 80 % Milchbestandteilen
besteht.

2. Trockengemisch nach Anspruch 1, **dadurch gekennzeichnet, daß** es ein oder mehrere modifizierte und/oder ein oder mehrere native Gelier- und/oder Verdickungsmittel enthält.

3. Trockengemisch nach einem der vorhergehenden Ansprüche, **dadurch gekennzeichnet, daß** Gelier- und/oder Verdickungsmittel aus Landpflanzen, vorzugsweise Stärke und Stärkeprodukte und/oder aus Meerespflanzen, vorzugsweise Carrageenane, als auch aus Mikroorganismen verwendet werden.

4. Trockengemisch nach einem der vorhergehenden Ansprüche, **dadurch gekennzeichnet, daß** eine oder mehrere dispergierende Substanzen Verwendung finden.

5. Trockengemisch nach einem der vorhergehenden Ansprüche, **dadurch gekennzeichnet, daß** ein oder mehrere Milchbestandteile wie Vollmilchpulver, Magermilch-, Buttermilch-, Molken-, Sahnepulver und dergleichen enthalten sind, vorzugsweise in instantisierter Form.

6. Verfahren zum Fertigstellen des Endprodukts, **dadurch gekennzeichnet, daß** dem erfindungsgemäßen Trockenprodukt Flüssigkeit zugesetzt wird, wobei diese Flüssigkeit eine Temperatur von 6 - 99 °C aufweist und mit Rührgeschwindigkeit von max. 2000 U/min gearbeitet wird.

7. Verfahren zum Fertigstellen des Endprodukts nach Anspruch 6, **dadurch gekennzeichnet, daß** während der Einrührphase von 1 - 300 sek. eine Anfangsviskosität von max. 500 BE eingehalten wird und daraufhin das Viskositätsmaximum von mindestens 300 BE innerhalb von 5 - 600 sek. erreicht wird.
